# EUROPÄISCHE PATENTSCHRIFT

(11) **EP 3 816 532 B1**
(45) Veröffentlichungstag und Bekanntmachung des Hinweises auf die Patenterteilung: **19.04.2023**
(21) Anmeldenummer: 19206460.8
(22) Anmeldetag: 31.10.2019
(51) Int. Cl.: F24F 12/00, F24F 11/84

(54) **VERFAHREN ZUR EINSTELLUNG EINES BETRIEBSZUSTANDES EINES KREISLAUFVERBUNDSYSTEMS EINER LUFTTECHNISCHEN, VORZUGSWEISE RAUMLUFTTECHNISCHEN ANLAGE**
METHOD FOR ADJUSTING THE OPERATING STATE OF A CIRCUIT COMPOSITE SYSTEM OF AN AIR TECHNICAL, PREFERABLY SPACE-AIR TECHNICAL INSTALLATION
PROCÉDÉ DE RÉGLAGE DE L'ÉTAT DE FONCTIONNEMENT D'UN SYSTÈME DE RACCORDEMENT DE CIRCUIT D'UNE INSTALLATION TECHNIQUE D'AÉRATION, DE PRÉFÉRENCE D'AIR AMBIANT

(43) Veröffentlichungstag der Anmeldung: 05.05.2021
(73) Patentinhaber: TROX GmbH, 47506 Neukirchen-Vluyn (DE)
(72) Erfinder: Hetzel, Georg, 57462 Olpe (DE); Engbers, Jan, 48691 Vreden (DE)
(74) Vertreter: Dr. Stark & Partner Patentanwälte mbB

(56) Entgegenhaltungen:
- EP-A1- 2 910 866
- CH-A5- 599 510
- CN-A- 109 114 781
- DE-A1- 4 408 087
- DE-A1-102009 011 747

## Beschreibung

Die Erfindung betrifft ein Verfahren zur Einstellung eines Betriebszustandes eines Kreislaufverbundsystems einer lufttechnischen, vorzugsweise raumlufttechnischen Anlage,
- wobei das Kreislaufverbundsystem einen Wärmeaufnahmebereich und einen Wärmeabgabebereich aufweist und wobei der Wärmeaufnahmebereich und der Wärmeabgabebereich über zumindest eine, einen geschlossenen Kreislauf bildende und von einem Trägermedium durchströmte, Leitung verbunden sind,
- wobei in dem Wärmeaufnahmebereich zumindest ein Wärmeübertrager angeordnet ist, mittels dem Wärme von einem warmen Luftvolumenstrom an das in der Leitung strömende Trägermedium abgegeben wird, wobei dem Wärmeübertrager zur Veränderung der diesen Wärmeübertrager durchströmenden Menge an Trägermedium ein mittels eines Antriebes steuerbares Ventil zugeordnet ist,
- wobei in dem Wärmeabgabebereich zumindest ein Wärmeübertrager angeordnet ist, mittels dem Wärme von dem in der Leitung strömenden Trägermedium an einen kalten Luftvolumenstrom abgegeben wird, wobei dem Wärmeübertrager zur Veränderung der diesen Wärmeübertrager durchströmenden Menge an Trägermedium ein mittels eines Antriebes steuerbares Ventil zugeordnet ist,

- wobei in der Leitung zur Erzielung einer Strömung, vorzugsweise in einem der beiden Übergangsbereiche, zumindest eine geregelte Pumpe vorgesehen ist und
- wobei jeder Antrieb mittels einer Steuereinrichtung oder Regeleinrichtung ansteuerbar ist,
- wobei in dem Wärmeaufnahmebereich und in dem Wärmeabgabebereich zumindest ein zu dem dort vorhandenen Wärmeübertrager strömungstechnisch gesehen parallel angeordneter, weiterer Wärmeübertrager angeordnet ist, wobei dem Wärmeübertrager zur Veränderung der diesen weiteren Wärmeübertrager durchströmenden Menge an Trägermedium ein mittels eines Antriebes steuerbares Ventil zugeordnet ist.

Kreislaufverbundsysteme, auch KV-Systeme genannt, stellen Wärmerückgewinnungsanlagen oder Wärmeverschiebesysteme dar. Bei Verwendung des Kreislaufverbundsystems in einer (raum)lufttechnischen Anlage wird mittels der in dem Wärmeaufnahmebereich angeordneten Wärmeübertrager Wärme von einem warmen Luftvolumenstrom an das in der Leitung strömende Trägermedium abgegeben und mittels der in dem Wärmeabgabebereich angeordneten Wärmeübertrager Wärme von dem in der Leitung strömenden Trägermedium an einen kalten Luftvolumenstrom abgegeben. Bei dem warmen Luftvolumenstrom kann es sich beispielsweise um abgeführte Raumluft und bei dem kalten Luftvolumenstrom kann es sich beispielsweise um zugeführte Außenluft handeln. Die Wärmeübertrager sind mittels einer Leitung verbunden, durch die ein Trägermedium strömt. In der Leitung ist zumindest eine geregelte Pumpe derart angeordnet, dass das Trägermedium im Kreis gefördert wird.

Für einen Betrieb des Kreislaufverbundsystems ist ein hydraulischer Abgleich erforderlich. Der hydraulische Abgleich dient der Einstellung eines Volumenstroms in einem verzweigten hydraulischen System. Ist beispielsweise in einem Strang der Volumenstrom zu niedrig, wird im Wege eines hydraulischen Abgleichs der Durchfluss in einem anderen Strang oder in mehreren anderen Strängen gedrosselt.

Weist ein Kreislaufverbundsystem beispielsweise sowohl in dem Wärmeabgabebereich als auch in dem Wärmeaufnahmebereich jeweils zwei strömungstechnisch gesehen parallel zueinander angeordnete Wärmeübertrager auf, ist eine Mengenregelung zwischen den zwei strömungstechnisch gesehen parallel zueinander angeordneten Wärmeübertragern im Wärmeabgabebereich bzw. im Wärmeaufnahmebereich erforderlich. Dies erfolgt beispielsweise durch das einem Wärmeübertrager zugeordnete steuerbare Ventil. Durch die geregelte Pumpe kann die transportierte Menge an Trägermedium, beispielsweise zur Anpassung an ein neues Lastverhältnis (neuer Betriebszustand), in dem Kreislaufverbundsystem dynamisch geregelt werden. Beim dynamischen Abgleich kann es bei der vorbeschriebenen Ausgestaltung des Kreislaufverbundsystems zu Schwingungen kommen. Die Regler, d. h. die Ventile, nehmen nicht ihre erforderliche Regelposition ein, sondern wechseln ihre Position beispielsweise abwechselnd zwischen voll offen oder ganz geschlossen. Ursächlich hierfür ist, dass die Regler, d. h. die Ventile, teilweise in Reihe geschaltet sind. So sind bei der vorbeschriebenen Ausgestaltung des Kreislaufverbundsystems beispielsweise die beiden Wärmeübertrager des Wärmeaufnahmebereichs in Reihe zu jedem der beiden Wärmeübertrager im Wärmeabgabebereich geschaltet. Aus der DE 44 08 087 A1 ist ein Verfahren zum Betrieb einer Wärmeaustauscheranlage, für rekuperativen Wärmeaustausch zwischen flüssigen und gasförmigen Medien im Gegenstromprinzip, mit mehreren, innerhalb des Wärmeaustauschers unterschiedlichen Wärmekapazitätenstromverhältnissen bekannt.

Aufgabe der Erfindung ist es, die vorgenannten Nachteile zu vermeiden und ein Verfahren anzugeben, mittels dem beim Betrieb des Kreislaufverbundsystems jedem Wärmeübertrager der Volumenstrom zugeordnet wird, den er wegen seines derzeitigen Betriebszustandes benötigt.

Diese Aufgabe wird dadurch gelöst, dass während des Betriebs des Kreislaufverbundsystems
zumindest ein Ventil eines in dem Wärmeaufnahmebereich angeordneten Wärmeübertragers vollständig in seine Offenstellung verlagert wird und unverändert in seiner Offenstellung verbleibt und zumindest ein Ventil eines in dem Wärmeaufnahmebereich angeordneten Wärmeübertragers nicht vollständig geöffnet ist
   und
zumindest ein Ventil eines in dem Wärmeabgabebereich angeordneten Wärmeübertragers vollständig in seine Offenstellung verlagert wird und unverändert in seiner Offenstellung verbleibt und zumindest ein Ventil eines in dem Wärmeabgabebereich angeordneten Wärmeübertragers nicht vollständig geöffnet ist.

Ein Ventil, das vollständig in seine Offenstellung verlagert wird und unverändert in seiner Offenstellung verbleibt, ist zu 100% geöffnet. In diesem Status kommt dem Ventil keine Regelfunktion zu. Es dient nur der Überströmung für den verbleibenden Volumenstrom.

Bei dem erfindungsgemäßen Verfahren ist immer eine ungeregelte Überströmeinrichtung in Form eines Ventils geschaffen, das vollständig in seine Offenstellung verlagert ist und in seiner Offenstellung unverändert verbleibt, wobei ein solches Ventil sowohl im Wärmeaufnahmebereich als auch im Wärmeabgabebereich vorgesehen ist. Durch das erfindungsgemäße Verfahren werden die Regelkreise der einzelnen Ventile entkoppelt, so dass diese sich nicht mehr gegenseitig negativ beeinflussen.

Unter "nicht vollständig geöffnet" wird jede Stellung eines Ventils verstanden, in der das betreffende Ventil nicht 100% geöffnet ist. Insoweit kann das Ventil auch vollständig geschlossen sein.

Unter dem Übergangsbereich wird zum einen das Stück der Leitung bezeichnet, das sich zwischen dem Knotenpunkt, in dem die Leitungen der Wärmeübertrager des Wärmeaufnahmebereichs zusammengeführt sind, und dem Knotenpunkt, von dem die Leitungen der Wärmeübertrager des Wärmeabgabebereichs abgehen, erstreckt, sowie zum anderen das Stück der Leitung bezeichnet, das sich zwischen dem Knotenpunkt, in dem die Leitungen der Wärmeübertrager des Wärmeabgabebereichs zusammengeführt sind, und dem Knotenpunkt, von dem die Leitungen der Wärmeübertrager des Wärmeaufnahmebereichs abgehen, erstreckt.

In der Grundausführung ist bei dem erfindungsgemäßen Kreislaufverbundsystem entweder in dem Wärmeaufnahmebereich ein Wärmeübertrager und in dem Wärmeabgabebereich zumindest zwei Wärmeübertrager angeordnet oder umgekehrt in dem Wärmeaufnahmebereich zumindest zwei Wärmeübertrager und in dem Wärmeabgabebereich ein Wärmeübertrager angeordnet. Es können bei dem erfindungsgemäßen Kreislaufverbundsystem aber auch in dem Wärmeaufnahmebereich zumindest zwei Wärmeübertrager und in dem Wärmeabgabebereich ebenfalls zumindest zwei Wärmeübertrager angeordnet sein. Dabei ist vorzugsweise jedem Wärmeübertrager zur Veränderung der diesen Wärmeübertrager durchströmenden Menge an Trägermedium ein mittels eines Antriebes steuerbares Ventil zugeordnet.

Jede geregelte Pumpe kann beispielsweise mit einer bauseitig vorhandenen Gebäudeleittechnik oder mit einer übergeordneten speicherprogrammierbaren Steuerung/Regelung (SPS) verbunden sein, die die betreffende Pumpe regelt. Auf diese Weise kann die Menge des in dem Kreislaufverbundsystem im Kreislauf transportierten Trägermediums geregelt werden.

Der Wärmeaufnahmebereich und der Wärmeabgabebereich sind nicht einem festen Ort zugeschrieben. Vielmehr kann ein Bereich beispielsweise im Sommer den Wärmeaufnahmebereich und der gleiche Bereich beispielsweise im Winter den Wärmeabgabebereich darstellen.

In einem Betriebszustand kann während des Betriebs des Kreislaufverbundsystems
das jeweilige Ventil zumindest eines nicht vollständig geöffneten in dem Wärmeaufnahmebereich angeordneten Wärmeübertragers geregelt werden
   und/oder
das jeweilige Ventil zumindest eines nicht vollständig geöffneten in dem Wärmeabgabebereich angeordneten Wärmeübertragers geregelt werden.

Ein nicht vollständig geöffnetes Ventil kann entweder vollständig geschlossen sein oder alternativ geregelt werden. In dem letzten Fall dient das entsprechende Ventil der Regelung des benötigten Volumenstroms des diesem Ventil zugehörigen Wärmeübertragers.

In einem weiteren Betriebszustand kann während des Betriebs des Kreislaufverbundsystems
ein Ventil zumindest eines nicht vollständig geöffneten in dem Wärmeaufnahmebereich angeordneten Wärmeübertragers vollständig geschlossen sein und ein Ventil zumindest eines nicht vollständig geöffneten in dem Wärmeaufnahmebereich angeordneten Wärmeübertragers geregelt werden
   und/oder
ein Ventil zumindest eines nicht vollständig geöffneten in dem Wärmeabgabebereich angeordneten Wärmeübertragers vollständig geschlossen sein und ein Ventil zumindest eines nicht vollständig geöffneten in dem Wärmeabgabebereich angeordneten Wärmeübertragers geregelt werden.

In einem weiteren Betriebszustand können während des Betriebs des Kreislaufverbu ndsystems
die Ventile der nicht vollständig geöffneten in dem Wärmeaufnahmebereich angeordneten Wärmeübertrager vollständig geschlossen sein
   und/oder
die Ventile der nicht vollständig geöffneten in dem Wärmeabgabebereich angeordneten Wärmeübertrager vollständig geschlossen sein.

Es bietet sich an, wenn in der Leitung, vorzugsweise in einem der beiden Übergangsbereiche der Leitung, zumindest ein Sensor zur Bestimmung des in der Leitung strömenden Volumenstroms an Trägermedium vorgesehen ist.

Vorzugsweise ist dabei der Sensor auf der Druckseite der Pumpe angeordnet.

Zumindest bei einem Wärmeübertrager kann das diesem Wärmeübertrager zugeordnete Ventil in Strömungsrichtung des Trägermediums gesehen vorgelagert sein.

Zumindest einem Wärmeübertrager kann ein Sensor zur Bestimmung des durch diesen Wärmeübertrager strömenden Volumenstroms zugeordnet sein, wobei vorzugsweise der Sensor dem Wärmeübertrager in Strömungsrichtung des Trägermediums gesehen vorgelagert ist. Vorzugsweise ist jedem Wärmeübertrager jeweils ein Sensor zur Bestimmung des durch diesen Wärmeübertrager strömenden Volumenstroms zugeordnet, wobei vorzugsweise der Sensor dem jeweiligen Wärmeübertrager in Strömungsrichtung des Trägermediums gesehen vorgelagert ist. Es ist jedoch auch möglich, dass der Sensor dem jeweiligen Wärmeübertrager in Strömungsrichtung des Trägermediums gesehen nachgelagert ist. Es bietet sich an, wenn der Sensor zwischen dem dazugehörigen Ventil und dem dazugehörigen Wärmeübertrager angeordnet ist.

Als Trägermedium kann ein Wasser/Glykol-Gemisch verwendet werden, wobei auch andere geeignete Trägermedien eingesetzt werden können.

Als Trägermedium kann auch Wasser verwendet werden. Selbstverständlich sind als Trägermedium auch andere technische Wärmeträger verwendbar.

Jedem Antrieb kann eine eigene Steuereinrichtung oder eine eigene Regeleinrichtung zugeordnet sein. Die jedem Antrieb zugeordnete eigene Steuereinrichtung oder eigene Regeleinrichtung kann beispielsweise mit einer übergeordneten speicherprogrammierbaren Steuerung (SPS) verbunden sein, die jede eigene Steuereinrichtung oder eigene Regeleinrichtung entsprechend steuert bzw. regelt.

Alternativ kann allen Antrieben eine gemeinsame Steuereinrichtung oder eine gemeinsame Regeleinrichtung zugeordnet sein. So kann beispielsweise eine übergeordnete speicherprogrammierbare Steuerung (SPS) vorgesehen sein, die beispielsweise den Gesamtvolumenstrom bestimmt und auch die Pumpe entsprechend steuert bzw. regelt. Ferner kann die übergeordnete speicherprogrammierbare Steuerung (SPS) beispielsweise auch die einzelnen Ventile und deren Status "vollständig in seine Offenstellung verlagert und Verbleiben unverändert in seiner Offenstellung" (Kennzeichnung in den Figuren mit der Angabe "100%"), "nicht vollständig geöffnet, nämlich geregelt" (Kennzeichnung in den Figuren mit der Angabe "Auto") oder "nicht vollständig geöffnet, nämlich vollständig geschlossen" (Kennzeichnung in den Figuren mit der Angabe "0%") auch steuern bzw. regeln.

Zur Bestimmung des in der Leitung strömenden Volumenstroms, vorzugsweise zur Bestimmung des in einem der beiden Übergangsbereiche strömenden Volumenstroms, kann zumindest einer der einem Wärmeübertrager zugeordneten Sensoren verwendet werden. Selbstverständlich ist es auch möglich, mittels mehrerer oder mittels aller der jeweils einem Wärmeübertrager zugeordneten Sensoren des Kreislaufverbundsystems den Volumenstrom zu bestimmen. Zur Bestimmung des in der Leitung strömenden Volumenstroms, vorzugsweise zur Bestimmung des in einem der beiden Übergangsbereiche strömenden Volumenstroms, kann beispielsweise ein einem solchen Wärmeübertrager zugeordneter Sensor verwendet werden, dessen zugeordnetes Ventil nicht vollständig geöffnet ist und das geregelt wird. Der betreffende Wärmeübertrager, dem ein nicht vollständig geöffnetes Ventil, das geregelt wird, zugeordnet ist, wird noch von dem Trägermedium durchströmt.

Die Stellung des Ventils, dessen zugehöriger Sensor zur Bestimmung des Volumenstroms verwendet wird, muss nicht vollständig geöffnet sein. So kann der Sensor auch dann den Volumenstrom erfassen, wenn das dazugehörige Ventil teilweise geöffnet ist. Bei geschlossenem Ventil entspricht der Durchfluss 0 m³/h. Der Volumenstrom der beiden Übergangsbereiche ergibt sich aus der Summe aller parallel geschalteten Wärmeübertrager des Wärmeabgabebereichs oder aller parallel geschalteter Wärmeübertrager des Wärmeaufnahmebereichs.

Alternativ kann zur Bestimmung des in der Leitung strömenden Volumenstroms, vorzugsweise zur Bestimmung des in einem der beiden Übergangsbereiche strömenden Volumenstroms, ein solcher einem Wärmeübertrager zugeordneter Sensor verwendet werden, dessen zugeordnetes Ventil vollständig in seine Offenstellung verlagert wird und unverändert in seiner Offenstellung verbleibt.

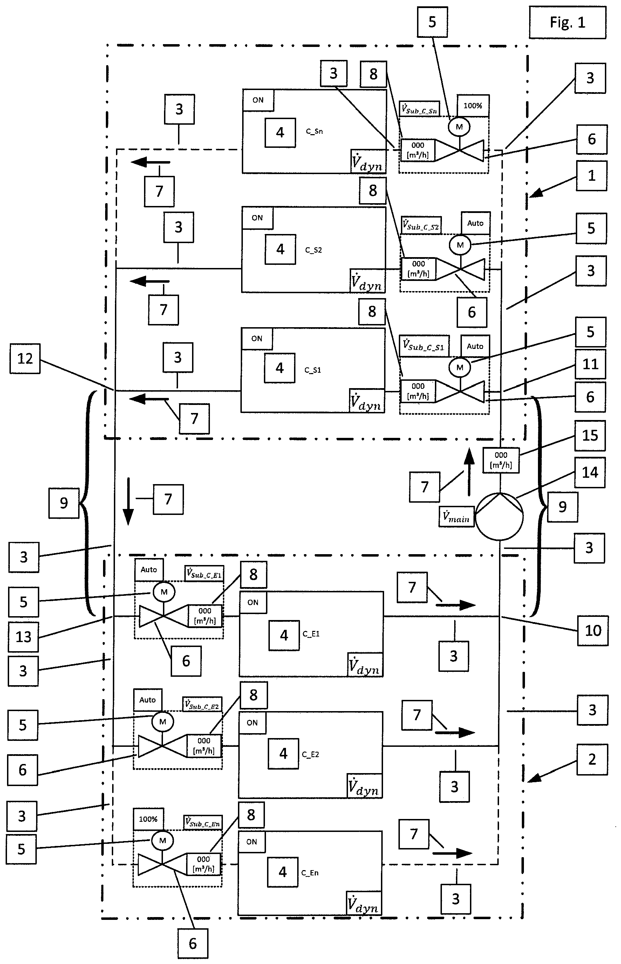

In den Fig. 1 bis 6 sind sechs verschiedene beispielhafte Betriebszustände eines Kreislaufverbundsystems einer lufttechnischen Anlage dargestellt. In allen Figuren werden für gleiche bzw. gleichartige Bauteile übereinstimmende Bezugszeichen verwendet.

Das Kreislaufverbundsystem weist einen Wärmeaufnahmebereich 1 und einen Wärmeabgabebereich 2 auf. Der Wärmeaufnahmebereich 1 und der Wärmeabgabebereich 2 sind über eine einen geschlossenen Kreislauf bildende und von einem Trägermedium durchströmte Leitung 3 verbunden. Als Trägermedium kann beispielsweise ein Wasser/Glykol-Gemisch verwendet werden.

In dem Wärmeaufnahmebereich 1 sind drei strömungstechnisch gesehen parallel zueinander angeordnete Wärmeübertrager 4 angeordnet, mittels denen Wärme von einem nicht dargestellten warmen Luftvolumenstrom an das in der Leitung 3 strömende Trägermedium abgegeben wird, wobei in dem dargestellten Ausführungsbeispiel jedem Wärmeübertrager 4 zur Veränderung der diesen Wärmeübertrager 4 durchströmenden Menge an Trägermedium ein mittels eines Antriebes 5 steuerbares Ventil 6 zugeordnet ist.

Auch in dem Wärmeabgabebereich 2 sind drei strömungstechnisch gesehen parallel zueinander angeordnete Wärmeübertrager 4 angeordnet, mittels denen Wärme von dem in der Leitung 3 strömenden Trägermedium an einen nicht dargestellten kalten Luftvolumenstrom abgegeben wird, wobei in dem dargestellten Ausführungsbeispiel wiederum jedem Wärmeübertrager 4 zur Veränderung der diesen Wärmeübertrager 4 durchströmenden Menge an Trägermedium ein mittels eines Antriebes 5 steuerbares Ventil 6 zugeordnet ist.

Wie in den Figuren dargestellt ist, ist bei jedem Wärmeübertrager 4 das diesem Wärmeübertrager 4 zugeordnete Ventil 6 in Strömungsrichtung 7 des Trägermediums gesehen vorgelagert. In dem dargestellten Ausführungsbeispiel ist jedem Wärmeübertrager 4 zusätzlich ein Sensor 8 zur Bestimmung des durch diesen Wärmeübertrager 4 strömenden Volumenstroms zugeordnet, wobei der Sensor 8 dem Wärmeübertrager 4 in Strömungsrichtung 7 des Trägermediums gesehen vorgelagert ist.

Zur einfacheren Beschreibung wird als Wärmeaufnahmebereich 1 die in den Figuren dargestellte obere Hälfte und als Wärmeabgabebereich 2 die in den Figuren dargestellte untere Hälfte des Kreislaufverbundsystems bezeichnet. Es ist selbstverständlich auch eine umgekehrte Aufteilung möglich.

Wie den Figuren zu entnehmen ist, weist die Leitung 3 zwei Übergangsbereiche 9 auf. Der eine Übergangbereich 9 ist das Stück der Leitung 3, das sich zwischen dem Knotenpunkt 10, in dem die Leitungen 3 der Wärmeübertrager 4 des Wärmeabgabebereichs 2 zusammengeführt sind, und dem Knotenpunkt 11, von dem die Leitungen 3 der Wärmeübertrager 4 des Wärmeaufnahmebereichs 1 abgehen, erstreckt. Da das Trägermedium im Kreislauf transportiert wird, entspricht der im linken Übergangsbereich 9 transportierte Volumenstrom an Trägermedium dem im rechten Übergangsbereich 9 transportierten Volumenstrom an Trägermedium.

Der andere Übergangbereich 9 ist das Stück der Leitung 3, das sich zwischen dem Knotenpunkt 12, in dem die Leitungen 3 der Wärmeübertrager 4 des Wärmeaufnahmebereichs 1 zusammengeführt sind, und dem Knotenpunkt 13, von dem die Leitungen 3 der Wärmeübertrager 4 des Wärmeabgabebereichs 2 abgehen, erstreckt.

Wie den Figuren zu entnehmen ist, ist in der Leitung 3 zur Erzielung einer Strömung in dem einen Übergangsbereich 9 eine Pumpe 14 vorgesehen. Es handelt sich um den Übergangbereich 9, der sich zwischen dem Knotenpunkt 10, in dem die Leitungen 3 der Wärmeübertrager 4 des Wärmeabgabebereichs 2 zusammengeführt sind, und dem Knotenpunkt 11, von dem die Leitungen 3 der Wärmeübertrager 4 des Wärmeaufnahmebereichs 1 abgehen, erstreckt.

Bei dem in den Figuren 1 bis 6 dargestellten Kreislaufverbundsystem ist in der Leitung 3 auf der Druckseite der Pumpe 14 ein Sensor 15 zur Bestimmung des mittels der Pumpe 14 geförderten Volumenstroms vorgesehen. Der Sensor 15 ist insoweit in dem gleichen Übergangsbereich 9 wie die Pumpe 14 angeordnet.

Jeder Antrieb 5 ist mittels einer nicht dargestellten Steuereinrichtung oder einer nicht dargestellten Regeleinrichtung ansteuerbar. Jedem Antrieb 5 kann eine eigene Steuereinrichtung oder ein eigene Regeleinrichtung zugeordnet sein. Alternativ kann beispielsweise auch allen Antrieben 5 eine gemeinsame Steuereinrichtung oder eine gemeinsame Regeleinrichtung zugeordnet sein.

So kann als gemeinsame Steuer- bzw. Regeleinrichtung beispielsweise eine übergeordnete speicherprogrammierbare Steuerung (SPS) vorgesehen sein. Diese kann beispielsweise den von der Pumpe 14 geförderten Gesamtvolumenstrom unter Berücksichtigung des mittels des Sensors 15 ermittelten Volumenstroms bestimmen und die Pumpe 14 entsprechend steuern bzw. regeln. Die übergeordnete speicherprogrammierbare Steuerung (SPS) kann auch die einzelnen Ventile 6 und ihren nachfolgend noch näher erläuterten Status "vollständig in seine Offenstellung verlagert und Verbleiben unverändert in seiner Offenstellung" (Kennzeichnung in den Figuren mit der Angabe "100%), "nicht vollständig geöffnet, nämlich geregelt" (Kennzeichnung in den Figuren mit der Angabe "Auto") oder "nicht vollständig geöffnet, nämlich vollständig geschlossen" (Kennzeichnung in den Figuren mit der Angabe "0%") steuern bzw. regeln.

In allen sechs dargestellten Betriebszuständen ist während des Betriebs des Kreislaufverbundsystems immer ein Ventil 6 eines in dem Wärmeaufnahmebereich 1 angeordneten Wärmeübertragers 4 vollständig in seine Offenstellung verlagert und verbleibt unverändert in seiner Offenstellung und zumindest ein Ventil 6 eines in dem Wärmeaufnahmebereich 1 angeordneten Wärmeübertragers 4 ist nicht vollständig geöffnet.

Ferner ist in an allen sechs dargestellten Betriebszuständen zumindest ein Ventil 6 eines in dem Wärmeabgabebereich 2 angeordneten Wärmeübertragers 4 vollständig in seine Offenstellung verlagert und verbleibt unverändert in seiner Offenstellung und zumindest ein Ventil 6 eines in dem Wärmeabgabebereich 2 angeordneten Wärmeübertragers 4 ist nicht vollständig geöffnet.

In den Figuren 1 bis 6 ist ein Ventil 6 eines in dem Wärmeaufnahmebereich 1 /Wärmeabgabebereich 2 angeordneten Wärmeübertragers 4, das vollständig in seine Offenstellung verlagert und unverändert in seiner Offenstellung verbleibt, mit der Angabe "100%" gekennzeichnet.

Unter "nicht vollständig geöffnet" wird jede Stellung eines Ventils 6 verstanden, in der das betreffende Ventil 6 nicht 100% geöffnet ist. Ein nicht vollständig geöffnetes Ventil 6 eines in dem Wärmeaufnahmebereich 1/Wärmeabgabebereich 2 angeordneten Wärmeübertragers 4 kann entweder vollständig geschlossen sein oder geregelt werden. Sofern ein nicht vollständig geöffnetes Ventil 6 geschlossen ist, ist das Ventil 6 in den Figuren mit "0%" gekennzeichnet. Sofern ein nicht vollständig geöffnetes Ventil 6 geregelt wird, ist das Ventil 6 in den Figuren mit "Auto" gekennzeichnet.

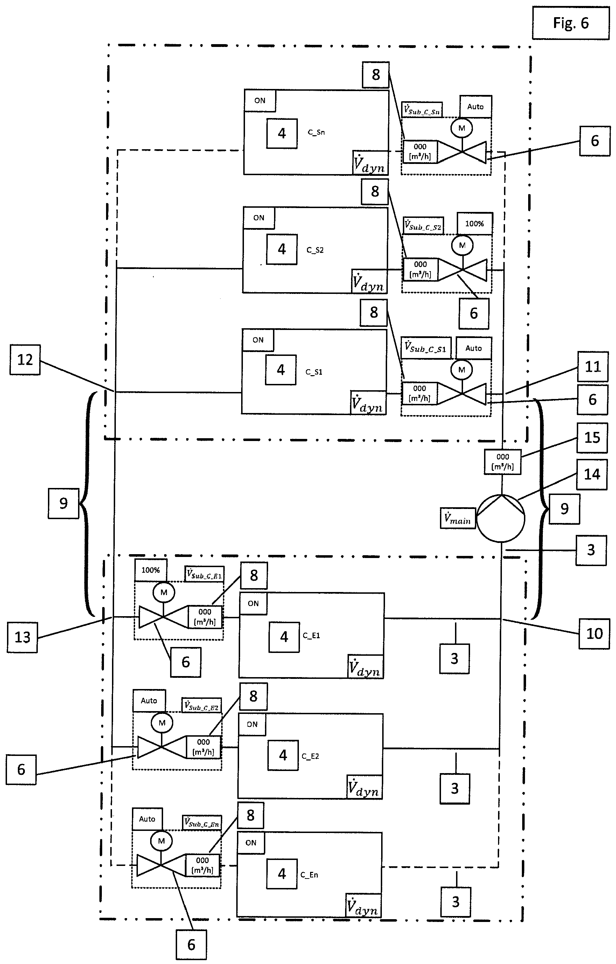

Bei den in den Figuren 1 und 6 dargestellten Betriebszuständen, ist sowohl in dem Wärmeaufnahmebereich 1 als auch in dem Wärmeabgabebereich 2 jeweils ein Ventil 6 vollständig in seine Offenstellung verlagert und verbleibt unverändert in seiner Offenstellung (Kennzeichnung "100%"), während die beiden anderen Ventile 6 des Wärmeaufnahmebereichs 1 und des Wärmeabgabebereiches 2 nicht vollständig geöffnet sind. Beide nicht vollständig geöffneten Ventile 6 des Wärmeaufnahmebereichs 1 und des Wärmeabgabebereiches 2 werden geregelt (Kennzeichnung "Auto").

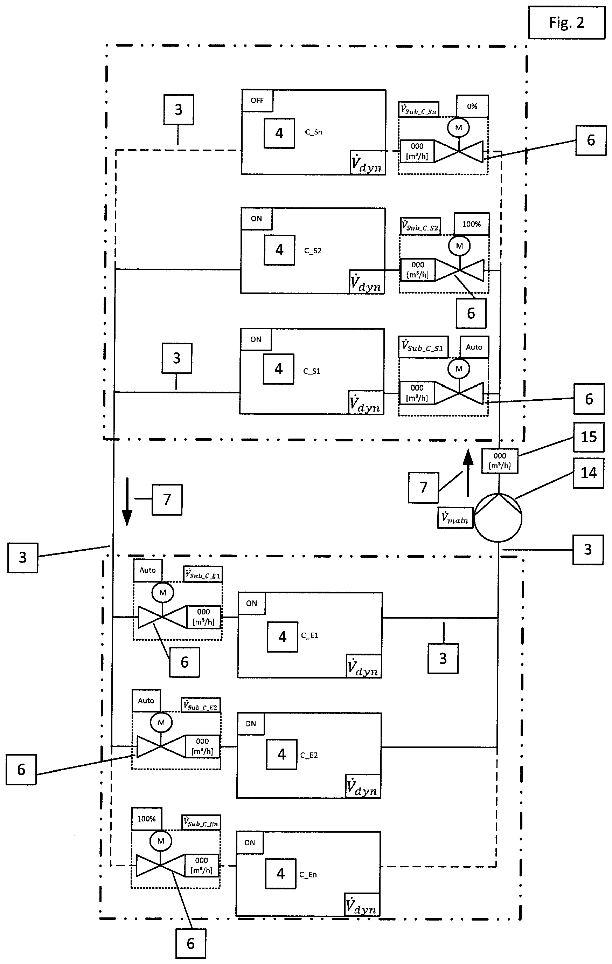

Bei dem in Fig. 2 dargestellten Betriebszustand ist in dem Wärmeaufnahmebereich 1 als auch in dem Wärmeabgabebereich 2 jeweils ein Ventil 6 vollständig in seine Offenstellung verlagert und verbleibt unverändert in seiner Offenstellung (Kennzeichnung "100%"), während die beiden anderen Ventile 6 des Wärmeaufnahmebereichs 1 und des Wärmeabgabebereiches 2 nicht vollständig geöffnet sind.

In dem Wärmeabgabebereich 2 werden beide nicht vollständig geöffneten Ventile 6 geregelt (Kennzeichnung "Auto"), während in dem Wärmeaufnahmebereich 1 das eine der beiden nicht vollständig geöffneten Ventile 6 geregelt wird (Kennzeichnung "Auto") und das andere der beiden nicht vollständig geöffneten Ventile 6 vollständig geschlossen ist (Kennzeichnung "0%").

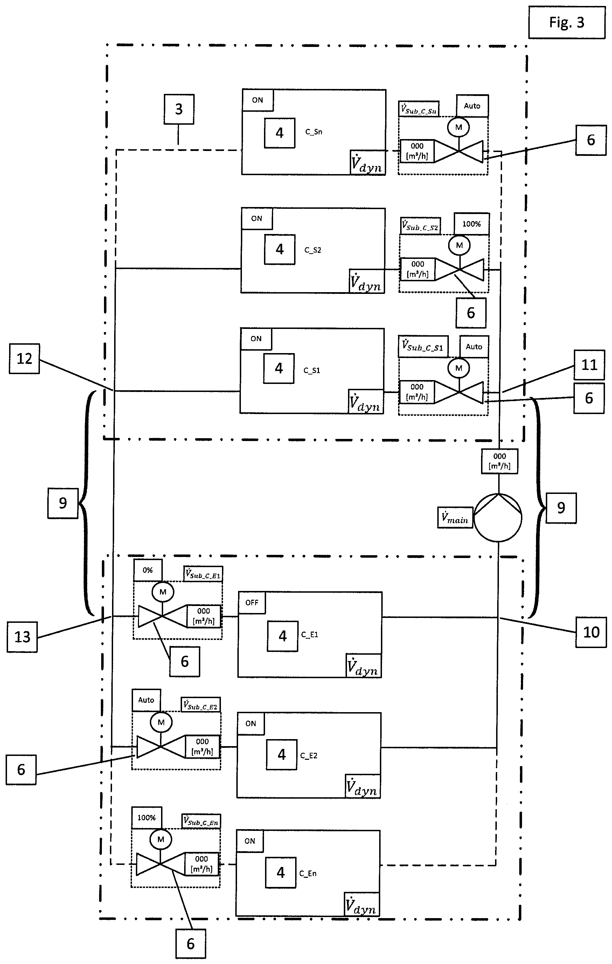

Bei dem in Fig. 3 dargestellten Betriebszustand ist in dem Wärmeaufnahmebereich 1 als auch in dem Wärmeabgabebereich 2 jeweils ein Ventil 6 vollständig in seine Offenstellung verlagert und verbleibt unverändert in seiner Offenstellung (Kennzeichnung "100%"), während die beiden anderen Ventile 6 des Wärmeaufnahmebereichs 1 und des Wärmeabgabebereiches 2 nicht vollständig geöffnet sind.

In dem Wärmeaufnahmebereich 1 werden beide nicht vollständig geöffneten Ventile 6 geregelt (Kennzeichnung "Auto"), während in dem Wärmeabgabebereich 2 das eine der beiden nicht vollständig geöffneten Ventile 6 geregelt wird (Kennzeichnung "Auto") und das andere der beiden nicht vollständig geöffneten Ventile 6 vollständig geschlossen ist (Kennzeichnung "0%").

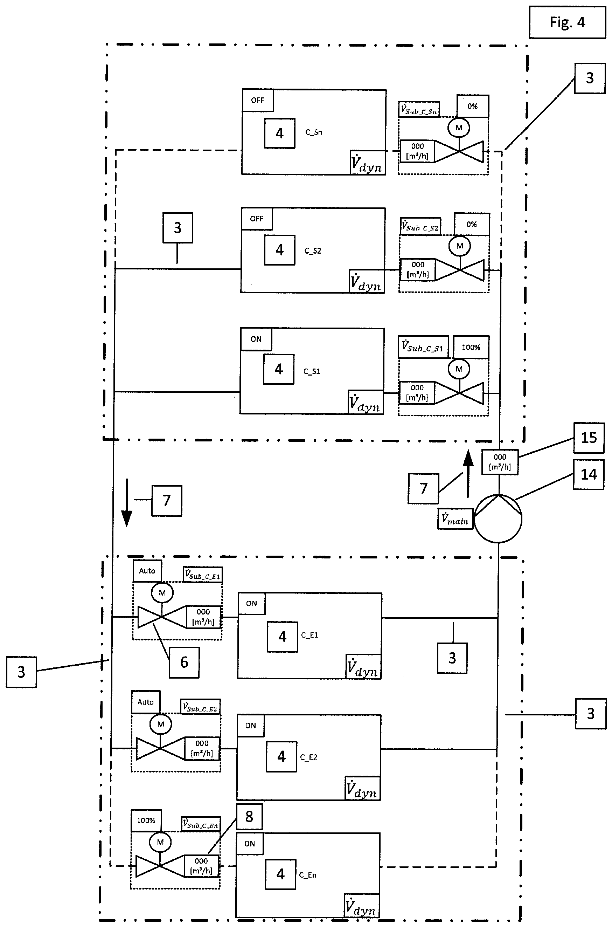

Bei dem in Fig. 4 dargestellten Betriebszustand ist in dem Wärmeaufnahmebereich 1 als auch in dem Wärmeabgabebereich 2 jeweils ein Ventil 6 vollständig in seine Offenstellung verlagert und verbleibt unverändert in seiner Offenstellung (Kennzeichnung "100%"), während die beiden anderen Ventile 6 des Wärmeaufnahmebereichs 1 und des Wärmeabgabebereiches 2 nicht vollständig geöffnet sind.

In dem Wärmeaufnahmebereich 1 sind beide nicht vollständig geöffneten Ventile 6 vollständig geschlossen (Kennzeichnung "0%"), während in dem Wärmeabgabebereich 2 beide nicht vollständig geöffneten Ventile 6 geregelt werden (Kennzeichnung "Auto").

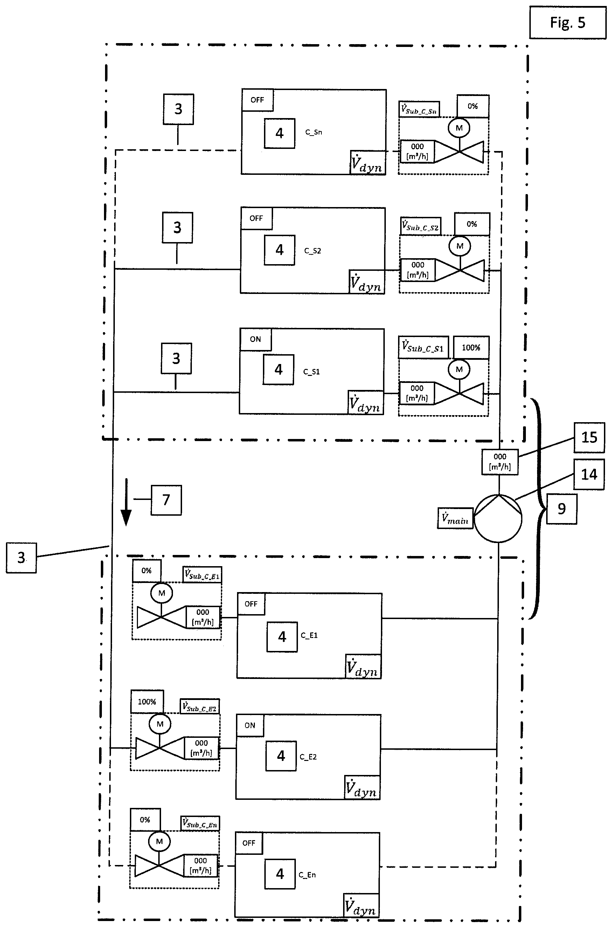

Bei dem in Fig. 5 dargestellten Betriebszustand ist in dem Wärmeaufnahmebereich 1 als auch in dem Wärmeabgabebereich 2 jeweils ein Ventil 6 vollständig in seine Offenstellung verlagert und verbleibt unverändert in seiner Offenstellung (Kennzeichnung "100%"), während die beiden anderen Ventile 6 des Wärmeaufnahmebereichs 1 und des Wärmeabgabebereiches 2 nicht vollständig geöffnet sind. Sowohl in dem Wärmeaufnahmebereich 1 als auch in dem Wärmeabgabebereich 2 sind die jeweils beiden nicht vollständig geöffneten Ventile 6 vollständig geschlossen (Kennzeichnung "0%"). In diesem Betriebszustand wird der die beiden Wärmeübertrager 4 durchströmende Volumenstrom des Trägermediums nur durch die Leistung der Pumpe 14 eingestellt.

Bei dem in den Figuren 1 bis 6 dargestellten Kreislaufverbundsystem ist in der Leitung 3 auf der Druckseite der Pumpe 14 der Sensor 15 zur Bestimmung des mittels der Pumpe 14 geförderten Volumenstroms vorgesehen. Es ist aber durchaus möglich, dass zur Bestimmung des mittels der Pumpe 14 geförderten Volumenstroms anstelle des zusätzlichen Sensors 15 einer der Sensoren 8 verwendet wird. Vorzugsweise wird der Sensor 8 eines solchen Wärmeübertragers 4 verwendet, dessen Ventil 6 vollständig in seine Offenstellung verlagert ist und unverändert in seiner Offenstellung verbleibt. Bei einer solchen Ausgestaltung kann beispielsweise der von der Pumpe 14 geförderte Gesamtvolumenstrom unter Berücksichtigung des mittels des Sensors 8 ermittelten Volumenstroms bestimmt und die Pumpe 14 entsprechend gesteuert bzw. geregelt werden.

Alternativ kann die Bestimmung des mittels der Pumpe 14 geförderten Volumenstroms auch durch alle drei Sensoren 8 des Wärmeaufnahmebereiches 1 und/oder des Wärmeabgabebereiches 2 erfolgen. Die Ventile 6 der Wärmeübertrager 4, dessen jeweiliger Sensor 6 zur Bestimmung des Volumenstroms verwendet wird, können dabei vollständig geöffnet oder teilweise geöffnet sein.

## Patentansprüche

1. . Verfahren zur Einstellung eines Betriebszustandes eines Kreislaufverbundsystems einer lufttechnischen, vorzugsweise raumlufttechnischen Anlage,
- wobei das Kreislaufverbundsystem einen Wärmeaufnahmebereich (1) und einen Wärmeabgabebereich (2) aufweist und wobei der Wärmeaufnahmebereich (1) und der Wärmeabgabebereich (2) über zumindest eine, einen geschlossenen Kreislauf bildende und von einem Trägermedium durchströmte, Leitung (3) verbunden sind,
- wobei in dem Wärmeaufnahmebereich (1) zumindest ein Wärmeübertrager (4) angeordnet ist, mittels dem Wärme von einem warmen Luftvolumenstrom an das in der Leitung (3) strömende Trägermedium abgegeben wird, wobei dem Wärmeübertrager (4) zur Veränderung der diesen Wärmeübertrager (4) durchströmenden Menge an Trägermedium ein mittels eines Antriebes (5) steuerbares Ventil (6) zugeordnet ist,
- wobei in dem Wärmeabgabebereich (2) zumindest ein Wärmeübertrager (4) angeordnet ist, mittels dem Wärme von dem in der Leitung (3) strömenden Trägermedium an einen kalten Luftvolumenstrom abgegeben wird, wobei dem Wärmeübertrager (4) zur Veränderung der diesen Wärmeübertrager (4) durchströmenden Menge an Trägermedium ein mittels eines Antriebes (5) steuerbares Ventil (6) zugeordnet ist,
- wobei in der Leitung (3) zur Erzielung einer Strömung, vorzugsweise in einem der beiden Übergangsbereiche (9), zumindest eine geregelte Pumpe (14) vorgesehen ist und
- wobei jeder Antrieb (5) mittels einer Steuereinrichtung oder Regeleinrichtung ansteuerbar ist,
- wobei in dem Wärmeaufnahmebereich (1) und in dem Wärmeabgabebereich (2) zumindest ein zu dem dort vorhandenen Wärmeübertrager (4) strömungstechnisch gesehen parallel angeordneter, weiterer Wärmeübertrager (4) angeordnet ist, wobei dem Wärmeübertrager (4) zur Veränderung der diesen weiteren Wärmeübertrager (4) durchströmenden Menge an Trägermedium ein mittels eines Antriebes (5) steuerbares Ventil (6) zugeordnet ist,
**dadurch gekennzeichnet, dass** während des Betriebs des Kreislaufverbundsystems zumindest ein Ventil (6) eines in dem Wärmeaufnahmebereich (1) angeordneten Wärmeübertragers (4) vollständig in seine Offenstellung verlagert wird und unverändert in seiner Offenstellung verbleibt und zumindest ein Ventil (6) eines in dem Wärmeaufnahmebereich (1) angeordneten Wärmeübertragers (4) nicht vollständig geöffnet ist und zumindest ein Ventil (6) eines in dem Wärmeabgabebereich (2) angeordneten Wärmeübertragers (4) vollständig in seine Offenstellung verlagert wird und unverändert in seiner Offenstellung verbleibt und zumindest ein Ventil (6) eines in dem Wärmeabgabebereich (2) angeordneten Wärmeübertragers (4) nicht vollständig geöffnet ist.

2. . Verfahren nach dem vorhergehenden Anspruch, **dadurch gekennzeichnet, dass** während des Betriebs des Kreislaufverbundsystems das jeweilige Ventil (6) zumindest eines nicht vollständig geöffneten in dem Wärmeaufnahmebereich (1) angeordneten Wärmeübertragers (4) geregelt wird und/oder das jeweilige Ventil (6) zumindest eines nicht vollständig geöffneten in dem Wärmeabgabebereich (2) angeordneten Wärmeübertragers (4) geregelt wird.

3. . Verfahren nach Anspruch 1, **dadurch gekennzeichnet, dass** während des Betriebs des Kreislaufverbundsystems ein Ventil (6) zumindest eines nicht vollständig geöffneten in dem Wärmeaufnahmebereich (1) angeordneten Wärmeübertragers (4) vollständig geschlossen ist und ein Ventil (6) zumindest eines nicht vollständig geöffneten in dem Wärmeaufnahmebereich (1) angeordneten Wärmeübertragers (4) geregelt wird und/oder ein Ventil (6) zumindest eines nicht vollständig geöffneten in dem Wärmeabgabebereich (2) angeordneten Wärmeübertragers (4) vollständig geschlossen ist und ein Ventil (6) zumindest eines nicht vollständig geöffneten in dem Wärmeabgabebereich (2) angeordneten Wärmeübertragers (4) geregelt wird.

4. . Verfahren nach Anspruch 1, **dadurch gekennzeichnet, dass** während des Betriebs des Kreislaufverbundsystems die Ventile (6) der nicht vollständig geöffneten in dem Wärmeaufnahmebereich (1) angeordneten Wärmeübertrager (4) vollständig geschlossen sind und/oder die Ventile (6) der nicht vollständig geöffneten in dem Wärmeabgabebereich (2) angeordneten Wärmeübertrager (4) vollständig geschlossen sind.

5. . Verfahren nach einem der vorhergehenden Ansprüche, **dadurch gekennzeichnet, dass** in der Leitung (3), vorzugsweise in einem der beiden Übergangsbereiche (9), zumindest ein Sensor (15) zur Bestimmung des in der Leitung (3) strömenden Volumenstroms an Trägermedium vorgesehen ist.

6. . Verfahren nach dem vorhergehenden Anspruch, **dadurch gekennzeichnet, dass** der Sensor (15) auf der Druckseite der Pumpe (14) angeordnet ist.

7. . Verfahren nach einem der vorhergehenden Ansprüche, **dadurch gekennzeichnet, dass** zumindest bei einem Wärmeübertrager (4) das diesem Wärmeübertrager (4) zugeordnete Ventil (6) in Strömungsrichtung (7) des Trägermediums gesehen vorgelagert ist.

8. . Verfahren nach einem der vorhergehenden Ansprüche, **dadurch gekennzeichnet, dass** zumindest einem Wärmeübertrager (4) ein Sensor (8) zur Bestimmung des durch diesen Wärmeübertrager (4) strömenden Volumenstroms zugeordnet ist, wobei vorzugsweise der Sensor (8) dem Wärmeübertrager (4) in Strömungsrichtung (7) des Trägermediums gesehen vorgelagert ist.

9. . Verfahren nach einem der vorhergehenden Ansprüche, **dadurch gekennzeichnet, dass** als Trägermedium ein Wasser/Glykol-Gemisch verwendet wird.

10. . Verfahren nach einem der Ansprüche 1 bis 8, **dadurch gekennzeichnet, dass** als Trägermedium Wasser verwendet wird.

11. . Verfahren nach einem der vorhergehenden Ansprüche, **dadurch gekennzeichnet, dass** jedem Antrieb (5) eine eigene Steuereinrichtung oder Regeleinrichtung zugeordnet ist.

12. . Verfahren nach einem der vorhergehenden Ansprüche, **dadurch gekennzeichnet, dass** allen Antrieben (5) eine gemeinsame Steuereinrichtung oder Regeleinrichtung zugeordnet ist.

13. . Verfahren nach einem der Ansprüche 8 bis 12, **dadurch gekennzeichnet, dass** zur Bestimmung des in der Leitung (3) strömenden Volumenstroms, vorzugsweise zur Bestimmung des in einem der beiden Übergangsbereiche (9) strömenden Volumenstroms, zumindest einer der Sensoren (8) verwendet wird.

14. . Verfahren nach dem vorhergehenden Anspruch, **dadurch gekennzeichnet, dass** zur Bestimmung des in der Leitung (3) strömenden Volumenstroms, vorzugsweise zur Bestimmung des in einem der beiden Übergangsbereiche (9) strömenden Volumenstroms, ein solcher Sensor (8) verwendet wird, dessen zugeordnetes Ventil (6) vollständig in seine Offenstellung verlagert wird und unverändert in seiner Offenstellung verbleibt.

## Claims

1. Method for adjusting the operating state of a circulatory system of a ventilation, preferably a ventilation system,
- wherein the circulatory system comprises a heat absorption region (1) and a heat emission region (2), and wherein the heat absorption region (1) and the heat emission region (2) are connected by means of at least one line (3) to form a closed circuit through which a carrier medium flows,
- wherein at least one heat exchanger (4) is arranged in the heat absorption region (1), by means of which heat is transferred from a hot air volume flow to the carrier medium flowing in the line (3), wherein the heat exchanger (4) is assigned a valve (6), which can be controlled by a drive means (5), in order to change the quantity of carrier medium flowing through this heat exchanger (4),
- wherein at least one heat exchanger (4) is arranged in the heat emission region (2), by means of which heat is transferred from the carrier medium flowing in the line (3) into a cold air volume flow, wherein the heat exchanger is assigned a valve, which can be controlled by a drive means (5), in order to change the quantity of carrier medium flowing through this heat exchanger (4),
- wherein, in order to achieve a flow, at least one regulated pump (14) is provided in the line (3), preferably in one of the two transfer regions (9), and
- wherein each drive means (5) can be actuated by means of a control device or regulating device,
- wherein at least one further heat exchanger (4) is arranged in the heat absorption region (1) and in the heat emission region (2), and is arranged in parallel to the heat exchanger (4) from a flow point of view, wherein the further heat exchanger (4) is assigned a valve (6), which can be controlled by means of a drive means (5), in order to change the quantity of carrier medium flowing through said further heat exchanger (4),
**characterised in that,** during the operation of the circulatory system, at least one valve (6) of a heat exchanger (4) arranged in the heat absorption region (1) is moved fully into its open position and remains unchanged in its open position, and at least one valve (6) of a heat exchanger (4) arranged in the heat absorption region (1) is not fully open, and at least one valve (6) of a heat exchanger (4) arranged in the heat emission region (2) is moved fully in its open position, and remains unchanged in its open position, and at least one valve (6) of a heat exchanger (4) arranged in the heat emission region (2) is not fully open.

2. Method according to the preceding claim, **characterised in that,** during the operation of the circulatory system, the respective valve (6) regulates at least one not fully open heat exchanger (4) arranged in the heat absorption region (1), and/or the respective valve (6) is regulated of at least one not fully open heat exchanger (4) arranged in the heat emission region (2).

3. Method according to claim 1, **characterised in that,** during the operation of the circulatory system, a valve (6) of a not fully opened heat exchanger (4), arranged in the heat absorption region (1) is fully closed, and a valve (6) of at least one not fully opened heat exchanger (4), arranged in the heat absorption region (1), is regulated, and/or a valve (6) of at least one not fully opened heat exchanger (4), arranged in the heat emission region (2), is fully closed, and a valve (6) is regulated of at least one not fully opened heat exchanger (4), arranged in the heat emission region (2).

4. Method according to claim 1, **characterised in that,** during the operation of the circulatory system, the valves (6) of the not fully opened heat exchangers (4), arranged in the heat absorption region (1), are fully closed, and/or the valves (6) of the not fully opened heat exchangers (4), arranged in the heat emission region (2), are fully closed.

5. Method according to any one of the preceding claims, **characterised in that** at least one sensor (15) is provided in the line (3), preferably in one of the two transfer regions (9), for determining the volume flow flowing in the line (3).

6. Method according to any one of the preceding claims, **characterised in that** the sensor (15) is arranged on the pressure side of the pump (14).

7. Method according to any one of the preceding claims, **characterised in that,** with at least one heat exchanger (4), the valve (6) assigned to this heat exchanger (4) is located upstream seen in the flow direction (7) of the carrier medium.

8. Method according to any one of the preceding claims, **characterised in that** at least one sensor (8) is arranged on a heat exchanger (4), in order to determine the volume flow flowing through this heat exchanger (4), wherein preferably the sensor (8) is located upstream of the heat exchanger (4), seen in the flow direction (7) of the carrier medium.

9. Method according to any one of the preceding claims, **characterised in that** a water/glycol mixture is used as the carrier medium.

10. Method according to any one of claims 1 to 8, **characterised in that** water is used as the carrier medium.

11. Method according to any one of the preceding claims, **characterised in that** an individual control device or regulating device is assigned to each drive means (5).

12. Method according to any one of the preceding claims, **characterised in that** a common control device or regulating device is assigned to all of the drive means (5).

13. Method according to any one of claims 8 to 12, **characterised in that,** in order to determine the volume flow flowing in the line (3), use is made of at least one of the sensors (8), preferably in order to determine the volume flow flowing in one of the two transfer regions (9).

14. Method according to the preceding claim, **characterised in that,** in order to determine the volume flow flowing in the line (3), use is made of one such sensor (8), preferably in order to determine the volume flow flowing in one of the two transfer regions (9), the valve (6) assigned to this is moved fully into its open position and remains unchanged in its open position.

## Revendications

1. Procédé de réglage d'un état de fonctionnement d'un système à circuit mixte d'une installation technique d'air, de préférence d'air ambiant,
- le système à circuit mixte présentant une zone d'absorption de chaleur (1) et une zone de fourniture de chaleur (2), et la zone d'absorption de chaleur (1) et la zone de fourniture de chaleur (2) étant reliées par au moins une conduite (3) formant un circuit fermé et traversée par un milieu porteur,
- au moins un échangeur de chaleur (4) étant agencé dans la zone d'absorption de chaleur (1), au moyen duquel de la chaleur provenant d'un flux volumétrique d'air chaud est fournie au milieu porteur circulant dans la conduite (3), une vanne (6) pouvant être commandée au moyen d'un entraînement (5) étant associée à l'échangeur de chaleur (4) pour modifier la quantité de milieu porteur traversant cet échangeur de chaleur (4),
- au moins un échangeur de chaleur (4) étant agencé dans la zone de fourniture de chaleur (2), au moyen duquel de la chaleur est fournie à partir du milieu porteur circulant dans la conduite (3) à un flux volumétrique d'air froid, l'échangeur de chaleur (4) étant associé à une vanne (6) pouvant être commandée au moyen d'un entraînement (5) pour modifier la quantité de fluide porteur traversant cet échangeur de chaleur (4),
- au moins une pompe régulée (14) étant prévue dans la conduite (3) pour obtenir un écoulement, de préférence dans l'une des deux zones de transition (9), et
- chaque entraînement (5) pouvant être commandé au moyen d'un dispositif de commande ou d'un dispositif de régulation,
- au moins un échangeur de chaleur supplémentaire (4) étant agencé dans la zone d'absorption de chaleur (1) et dans la zone de fourniture de chaleur (2) parallèlement à l'échangeur de chaleur (4) qui y est présent en termes de technique d'écoulement, une vanne (6) pouvant être commandée au moyen d'un entraînement (5) étant associée à l'échangeur de chaleur (4) pour modifier la quantité de fluide porteur traversant cet échangeur de chaleur supplémentaire (4),
**caractérisé en ce que** pendant le fonctionnement du système à circuit mixte, au moins une vanne (6) d'un échangeur de chaleur (4) agencé dans la zone d'absorption de chaleur (1) est complètement déplacée dans sa position ouverte et reste inchangée dans sa position ouverte et au moins une vanne (6) d'un échangeur de chaleur (4) agencé dans la zone d'absorption de chaleur (1) n'est pas complètement ouverte et au moins une vanne (6) d'un échangeur de chaleur (4) agencé dans la zone de fourniture de chaleur (2) est complètement déplacée dans sa position ouverte et reste inchangée dans sa position ouverte et au moins une vanne (6) d'un échangeur de chaleur (4) agencé dans la zone de fourniture de chaleur (2) n'est pas complètement ouverte.

2. Procédé selon la revendication précédente, **caractérisé en ce que** pendant le fonctionnement du système à circuit mixte, la vanne respective (6) d'au moins un échangeur de chaleur (4) non complètement ouvert agencé dans la zone d'absorption de chaleur (1) est régulée et/ou la vanne respective (6) d'au moins un échangeur de chaleur (4) non complètement ouvert agencé dans la zone de fourniture de chaleur (2) est régulée.

3. Procédé selon la revendication 1, **caractérisé en ce que** pendant le fonctionnement du système à circuit mixte, une vanne (6) d'au moins un échangeur de chaleur (4) non complètement ouvert agencé dans la zone d'absorption de chaleur (1) est complètement fermée et une vanne (6) d'au moins un échangeur de chaleur (4) non complètement ouvert agencé dans la zone d'absorption de chaleur (1) est régulée et/ou une vanne (6) d'au moins un échangeur de chaleur (4) non complètement ouvert agencé dans la zone de fourniture de chaleur (2) est complètement fermée et une vanne (6) d'au moins un échangeur de chaleur (4) non complètement ouvert agencé dans la zone de fourniture de chaleur (2) est régulée.

4. Procédé selon la revendication 1, **caractérisé en ce que** pendant le fonctionnement du système à circuit mixte, les vannes (6) des échangeurs de chaleur (4) non complètement ouverts agencés dans la zone d'absorption de chaleur (1) sont complètement fermées et/ou les vannes (6) des échangeurs de chaleur (4) non complètement ouverts agencés dans la zone de fourniture de chaleur (2) sont complètement fermées.

5. Procédé selon l'une quelconque des revendications précédentes, **caractérisé en ce qu'au** moins un capteur (15) est prévu dans la conduite (3), de préférence dans l'une des deux zones de transition (9), pour déterminer le flux volumétrique de milieu porteur circulant dans la conduite (3).

6. Procédé selon la revendication précédente, **caractérisé en ce que** le capteur (15) est agencé au niveau du côté de pression de la pompe (14).

7. Procédé selon l'une quelconque des revendications précédentes, **caractérisé en ce qu'au** moins pour un échangeur de chaleur (4), la vanne (6) associée à cet échangeur de chaleur (4) est disposée en amont dans la direction d'écoulement (7) du milieu porteur.

8. Procédé selon l'une quelconque des revendications précédentes, **caractérisé en ce qu'un** capteur (8) est associé à au moins un échangeur de chaleur (4) pour déterminer le flux volumétrique circulant à travers cet échangeur de chaleur (4), le capteur (8) étant de préférence disposé en amont de l'échangeur de chaleur (4) dans la direction d'écoulement (7) du milieu porteur.

9. Procédé selon l'une quelconque des revendications précédentes, **caractérisé en ce qu'un** mélange eau/glycol est utilisé comme milieu porteur.

10. Procédé selon l'une quelconque des revendications 1 à 8, **caractérisé en ce que** de l'eau est utilisée comme milieu porteur.

11. Procédé selon l'une quelconque des revendications précédentes, **caractérisé en ce qu'à** chaque entraînement (5) est associé un dispositif de commande ou de régulation spécifique.

12. Procédé selon l'une quelconque des revendications précédentes, **caractérisé en ce qu'**un dispositif de commande ou un dispositif de régulation commun est associé à tous les entraînements (5).

13. Procédé selon l'une quelconque des revendications 8 à 12, **caractérisé en ce qu'**au moins l'un des capteurs (8) est utilisé pour déterminer le flux volumétrique circulant dans la conduite (3), de préférence pour déterminer le flux volumétrique circulant dans l'une des deux zones de transition (9).

14. Procédé selon la revendication précédente, **caractérisé en ce que** pour déterminer le flux volumétrique circulant dans la conduite (3), de préférence pour déterminer le flux volumétrique circulant dans l'une des deux zones de transition (9), un tel capteur (8) est utilisé, dont la vanne associée (6) est déplacée complètement dans sa position ouverte et reste inchangée dans sa position ouverte.
